# FASCICULE DE BREVET EUROPEEN

(11) **EP 0 960 325 B1**
(45) Date de publication et mention de la délivrance du brevet: **31.03.2004**
(21) Numéro de dépôt: 98962483.8
(22) Date de dépôt: 16.12.1998
(51) Int. Cl.: G01M 3/04

(54) **DETECTEUR DE FUITES DANS UN DISTRIBUTEUR D'HYDROCARBURES LIQUIDES**
LECKDETEKTOR IN EINEM FLÜSSIGKOHLENWASSERSTOFF- VERTEILER
SENSOR FOR DETECTING LEAKS IN A LIQUID HYDROCARBON DISPENSER

(30) Priorité: 16.12.1997 FR 9715972
(43) Date de publication de la demande: 01.12.1999
(73) Titulaire: Tokheim Services France, 92350 Le Plessis Robinson (FR)
(72) Inventeur: NITECKI, Jean-Pierre, F-78530 Buc (FR)
(74) Mandataire: Cabinet HERRBURGER
(86) Numéro de dépôt international: PCT/FR1998/002754
(87) Numéro de publication internationale: WO 1999/031477

(56) Documents cités:
- DE-A- 3 538 604
- GB-A- 2 161 501
- US-A- 3 955 822
- US-A- 4 030 708
- US-A- 4 682 492
- US-A- 5 301 722
- US-A- 5 339 676
- US-A- 5 501 577
- US-A- 5 583 283
- PATENT ABSTRACTS OF JAPAN vol. 008, no. 072 (P-265), 4 avril 1984 & JP 58 219430 A (HITACHI SEISAKUSHO KK;OTHERS: 01), 20 décembre 1983
- PATENT ABSTRACTS OF JAPAN vol. 013, no. 102 (P-841), 10 mars 1989 & JP 63 282626 A (TOSHIBA CORP;OTHERS: 01), 18 novembre 1988
- PATENT ABSTRACTS OF JAPAN vol. 008, no. 175 (P-294), 11 août 1984 & JP 59 068640 A (MITSUBISHI JUKOGYO KK), 18 avril 1984
- PATENT ABSTRACTS OF JAPAN vol. 097, no. 009, 30 septembre 1997 & JP 09 117091 A (TOSHIBA CORP), 2 mai 1997

## Description

La présente invention concerne un détecteur de fuites dans un distributeur d'hydrocarbures liquides.

L'invention trouve une application particulièrement avantageuse dans le domaine de la protection de l'environnement vis-à-vis des hydrocarbures, notamment les carburants pour véhicules automobiles.

Compte tenu du souci de plus en plus grand de préserver la qualité de l'environnement, il apparaît essentiel d'équiper les distributeurs d'hydrocarbures liquides d'un système de détection de fuites, quelle que soit leur provenance à l'intérieur du distributeur.

A cet effet, plusieurs systèmes de détection peuvent être envisagés.

Tout d'abord, on peut avoir recours à la détection des vapeurs des hydrocarbures liquides à l'intérieur du distributeur. Ceci peut être réalisé, soit à l'aide de capteurs biologiques, optiques ou combinés, soit par mesure de la densité des vapeurs contenues dans le distributeur. Néanmoins, compte tenu de la très grande variété des températures, d'humidité et de qualité des installations dans les stations-service, ce type de détection crée de multiples fausses alarmes, ou, pire, de non-alarmes. D'autre part, les capteurs biologiques ont tendance à être empoisonnés par les additifs. De plus, les hydrocarbures liquides de type gazole ne générant par ou peu de vapeurs, il est difficile d'en détecter la présence, si ce n'est par les odeurs des additifs qu'ils contiennent.

On peut également penser détecter les fuites par la mesure de pression en différents points des canalisations de circulation des hydrocarbures. Cependant, outre que la détection de faibles fuites nécessite une parfaite connaissance et modélisation de la répartition des pressions dans les canalisations en fonction des conditions d'installation des distributeurs sur le site, il faut considérer que les capteurs doivent avoir une extrême sensibilité, de l'ordre de quelques mbars, et résister à des coups de bélier de plus de 15 bars, ce qui exige des équipements extrêmement coûteux. De plus, le logiciel doit présenter un niveau d'intelligence élevé pour traiter les informations des capteurs. Enfin, les capteurs travaillant en zone dangereuse doivent de plus être sécurisés et donc très chers.

Aussi, le problème technique à résoudre par l'objet de la présente invention est de proposer un détecteur de fuites dans un distributeur d'hydrocarbures liquides, qui serait de conception simple et bon marché tout en assurant une excellente efficacité et la sécurité exigée.

La solution au problème technique posé consiste, selon la présente invention, en ce que ledit détecteur comprend une plaque étanche, disposée au fond dudit distributeur et munie d'un récipient de collecte apte à recevoir les hydrocarbures liquides collectés par ladite plaque étanche et provenant de fuites dans le distributeur, ledit récipient de collecte comprenant un détecteur de niveau desdits hydrocarbures, apte à arrêter le fonctionnement du distributeur lorsque le niveau d'hydrocarbures détecté atteint un niveau donné.

On dispose ainsi d'un détecteur parfaitement sûr, car, du fait de la présence de la plaque étanche dans le fond du distributeur, les hydrocarbures liquides provenant de toutes fuites, quelle qu'en soit l'origine, sont collectés et donc détectés. De plus, le détecteur de l'invention met en oeuvre des composants (plaque, récipient de collecte et détecteur de niveau) bon marché et d'implantation facile dans les distributeurs.

Selon une autre caractéristique avantageuse du détecteur de fuites de l'invention, ledit distributeur comprenant une pompe, un compteur de débit et un calculateur, ledit calculateur est apte à détecter un débit d'hydrocarbures liquides dans ledit compteur après distribution, le fonctionnement de ladite pompe étant prolongé pendant une durée donnée.

Cette disposition particulière permet, en complément de la détection globale des fuites à l'intérieur du distributeur, de mettre en évidence des fuites qui se produiraient en aval du compteur de débit. En effet, si, en fin de distribution, juste après le raccroché de la lance, et plutôt que, de manière usuelle, arrêter le moteur de la pompe du distributeur, le fonctionnement dudit moteur est prolongé pendant une durée de l'ordre de quelques secondes, le calculateur continuant de surveiller les informations en provenance du compteur, un débit est détecté par le calculateur, celui-ci ne peut provenir que d'une fuite en aval du compteur, ce défaut étant alors signalé au gérant de la station-service où se trouve le distributeur défaillant. Ce système de détection est particulièrement utile dans le cas de distributeurs équipés de dispositifs de récupération de vapeurs à double flexible pour détecter d'éventuelles fuites d'hydrocarbures liquides qui pourraient être aspirés par le dispositif de récupération.

La description qui va suivre, en regard des dessins annexés, donnés à titre d'exemples non limitatifs, fera bien comprendre en quoi consiste l'invention et comment elle peut être réalisée.
La figure 1 est une vue de côté d'un distributeur d'hydrocarbures liquides équipé d'un détecteur de fuites conforme à l'invention.
La figure 2 est une vue de côté d'un détecteur de niveau du détecteur de fuite de la figure 1.
La figure 3 est une vue de côté d'une première variante de réalisation du détecteur de niveau de la figure 2.
La figure 4 est une vue de côté d'une deuxième variante, de réalisation du détecteur de niveau de la figure 2.
La figure 5 est une vue de côté d'un détecteur de niveau muni d'un détecteur de niveau d'eau.
La figure 6 est une vue de côté d'un passage de canalisation à travers la plaque étanche de la figure 1.

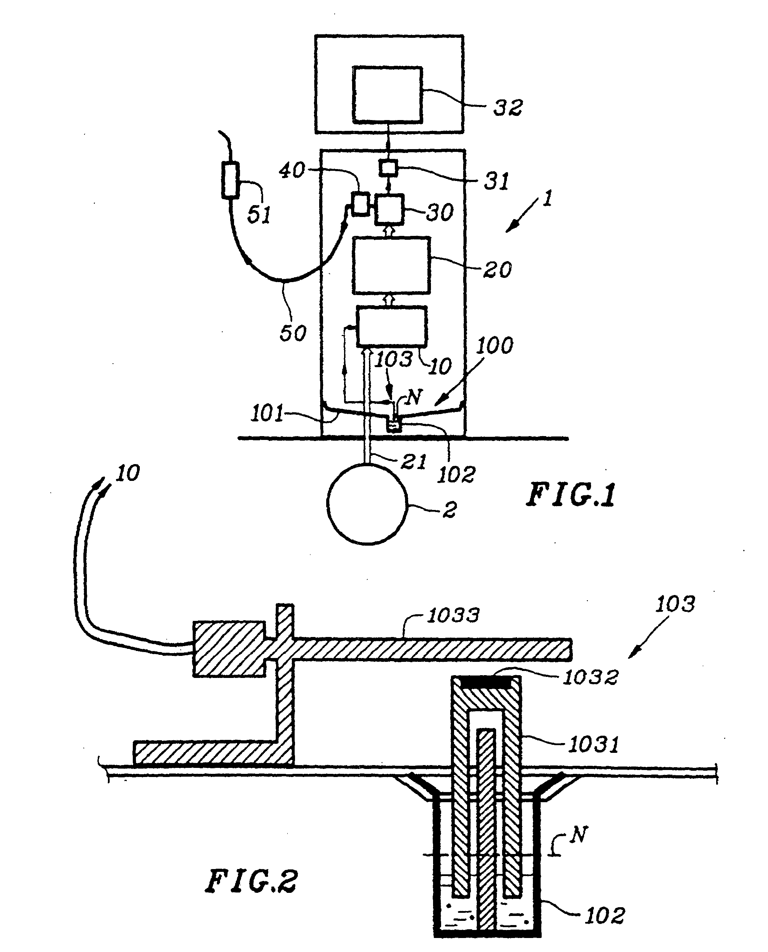

Sur la figure 1 est représenté un distributeur 1 d'hydrocarbures liquides comprenant une pompe 10 qui extrait lesdits hydrocarbures d'une cuve 2 de stockage et les amène dans un dispositif 20 de dégazage ayant pour but d'éliminer les gaz inclus dans le liquide, celui-ci étant ensuite conduit vers un compteur 30 de débit apte, en général, à produire un mouvement de rotation dont la vitesse angulaire est proportionnelle au débit d'hydrocarbures. Un transducteur 31 du type roue codeuse permet de convertir en impulsions électriques la position mécanique du compteur. Lesdites impulsions sont transmises à un calculateur 32 afin d'établir le volume d'hydrocarbures délivré et le montant à payer compte tenu du prix unitaire.

Après traversée du compteur 30 de débit, le liquide est amené, au travers d'un organe 40 de raccordement à un tuyau flexible 50 terminé par une lance 51 de distribution.

Comme on peut le voir sur la figure 1, le distributeur 1 comprend un détecteur 100 de fuites essentiellement composé d'une plaque 101 étanche disposée au fond du distributeur 1 et d'un récipient 102 de collecte apte à recevoir les hydrocarbures liquides collectés par la plaque 101, et provenant de fuites dans le distributeur. Selon le mode de réalisation de la figure 1, le récipient 102 de collecte est placé sensiblement au centre de la plaque 101, celle-ci affectant une forme évasée de manière à faciliter l'écoulement des hydrocarbures collectés vers le récipient 102 de collecte.

Comme l'indique la figure 1, ledit récipient 102 de collecte comprend un détecteur 103 de niveau, apte à arrêter le fonctionnement du distributeur 1 lorsque le niveau d'hydrocarbures détecté atteint un niveau N donné. Dans l'exemple de la figure 1, le détecteur 103 de niveau est relié au moteur de la pompe 10 du distributeur. Lorsque le niveau donné est atteint, le détecteur 103 envoie un signal de mise hors fonctionnement du moteur de la pompe 10.

La figure 2 illustre un mode de réalisation particulier du détecteur 103 de niveau dans lequel un flotteur 1031 est placé dans le récipient 102 de collecte. La position dudit flotteur 1031 est repérée par un détecteur de position constitué d'un aimant 1032 disposé à l'extrémité non immergée du flotteur 1031 et d'un élément 1033 sensible au champ magnétique, tel qu'un relais Reed ou un capteur à effet Hall, et relié à la pompe 10. A mesure que le récipient 102 de collecte se remplit, le niveau du flotteur 1031 s'élève et le champ magnétique perçu par l'élément sensible 1033 augmente jusqu'à ce qu'il atteigne une valeur suffisante pour activer ledit élément sensible et déclencher l'arrêt du moteur de la pompe 10. Le niveau N de déclenchement du détecteur 103 de fuites est calibré de manière à correspondre à un volume des fuites déterminé, par exemple inférieur à 100cm3.

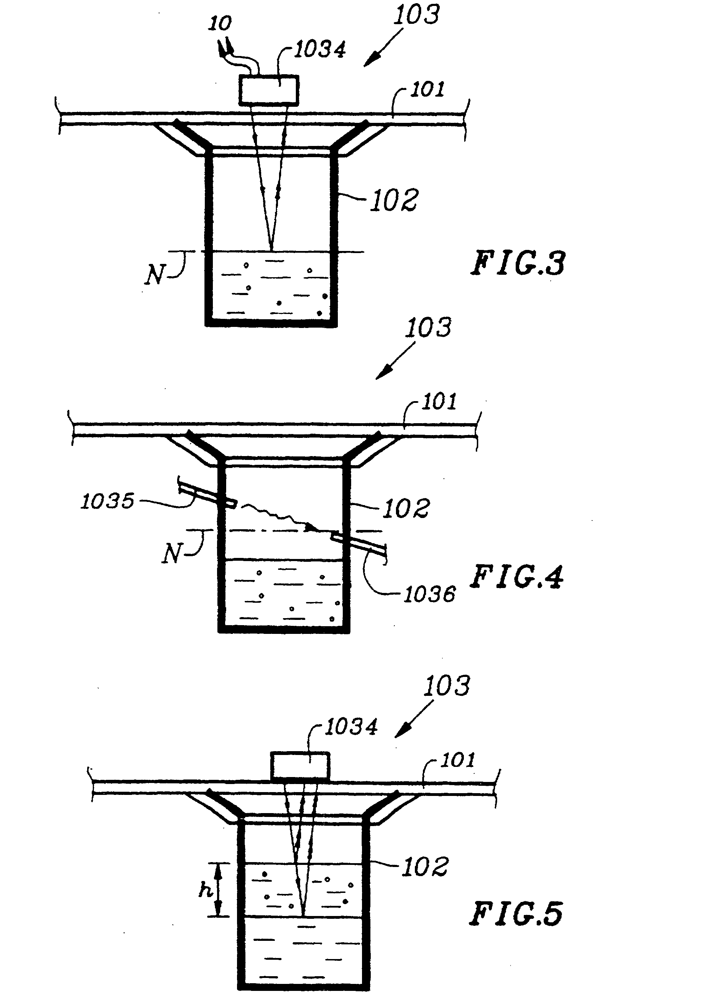

La figure 3 montre une variante de réalisation du détecteur 103 de niveau, comprenant un transducteur piezoélectrique 1034 destiné à émettre une onde ultrasonore et à détecter l'écho provenant de la surface des hydrocarbures liquides dans le récipient 102 de collecte. Le temps écoulé entre l'émission de l'onde ultrasonore et la détection de l'écho est directement proportionnel à la position du niveau de liquide dans le récipient 102.

Une autre variante est donnée à la figure 4. Il s'agit d'un détecteur de niveau optique constitué par une fibre optique émettrice 1035 d'une onde lumineuse et d'une fibre optique réceptrice 1036, placées en alignement de part et d'autre du récipient 102 de collecte. Lorsque le niveau d'hydrocarbures liquides a atteint le niveau N de la figure 4, l'onde lumineuse est déviée par réflexion et réfraction et la fibre optique réceptrice 1036 ne reçoit plus de rayonnement lumineux, cette situation est détectée par un capteur optique, non représenté, situé en extrémité de la fibre optique 1036, lequel envoie un signal d'arrêt de la pompe 10.

Compte tenu que de l'eau peut remplir accidentellement le récipient 102 de collecte, il faut prévoir des moyens permettant de s'affranchir de ce phénomène susceptible de fausser le fonctionnement du détecteur de fuites conforme à l'invention.

Une première disposition consiste à rendre amovible le récipient 102 de collecte, le gérant de la station-service pouvant purger ledit récipient de son eau à chaque inspection du distributeur 1.

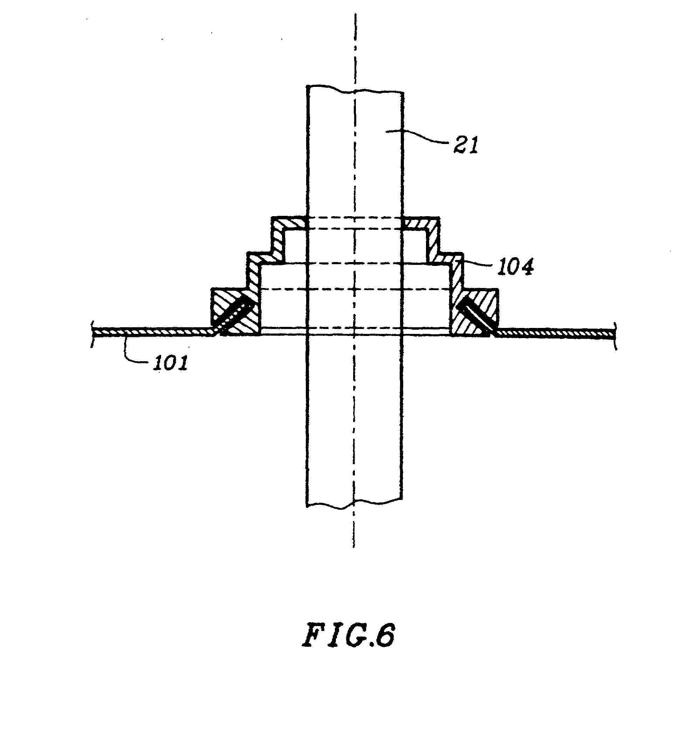

Dans le cas de stations-service dites fantômes car fonctionnant sans personnel, on peut utiliser le détecteur de niveau de la figure 5. Ce dernier utilise un transducteur piézoélectrique 1034, identique à celui de la figure 3, apte à détecter les échos de l'onde ultrasonore se produisant, d'une part, à l'interface air/hydrocarbures, et, d'autre part, à l'interface hydrocarbures/eau. Le temps séparant ces deux échos est directement proportionnel à la hauteur h d'hydrocarbures.

Bien entendu, compte tenu de sa position dans le distributeur 1, la plaque 101 est traversée par des canalisations, telles que celle référencée 21 sur la figure 2, provenant de la cuve 2 de stockage. Afin d'assurer l'étanchéité du détecteur de fuites, objet de l'invention, le passage des canalisations à travers la plaque 101 doit s'effectuer lui-même de façon étanche, ce qui peut être obtenu par un joint souple 104 à soufflet comme celui représenté sur la figure 6.

Le calculateur 32 peut être équipé d'un logiciel permettant, au lieu d'arrêter la pompe 10 au raccroché de la lance 51, c'est-à-dire à la fin de la distribution, de prolonger le fonctionnement de ladite pompe pendant une durée donnée, et quelques secondes. De cette manière, en cas de fuites d'hydrocarbures liquides en aval du compteur 30, un débit sera détecté par le calculateur 32 et l'anomalie signalée au gérant de la station-service. Comme cela a déjà été mentionné plus haut, cette possibilité de détecter des fuites en aval du compteur 30 de débit est avantageuse pour mettre en évidence l'aspiration d'hydrocarbures liquides par les dispositifs de récupération de vapeur équipant les distributeurs.

## Revendications

1. Détecteur de fuites dans un distributeur (1) d'hydrocarbures liquides, **caractérisé en ce que** ledit détecteur (100) comprend une plaque (101) étanche, disposée au fond dudit distributeur (1) et munie d'un récipient (102) de collecte apte à recevoir les hydrocarbures liquides collectés par ladite plaque (101) étanche et provenant de fuites dans le distributeur (1), ledit récipient (102) de collecte comprenant un détecteur (103) de niveau desdits hydrocarbures, aptes à arrêter le fonctionnement du distributeur (1) lorsque le niveau d'hydrocarbures détecté atteint un niveau (N) donné.

2. Détecteur selon la revendication 1, **caractérisé en ce que** ledit détecteur (103) de niveau est un flotteur (1031) équipé d'un détecteur (1032, 1033) de position.

3. Détecteur selon la revendication 1, **caractérisé en ce que** ledit détecteur (103) de niveau est un détecteur (1034) à ultrasons.

4. Détecteur selon la revendication 1, **caractérisé en ce que** ledit détecteur (103) de niveau est un détecteur (1035, 1036) optique.

5. Détecteur selon l'une quelconque des revendications 1 à 4, **caractérisé en ce que** le récipient (102) de collecte est amovible.

6. Détecteur selon l'une quelconque des revendications 2 à 5, **caractérisé en ce que** le récipient (102) de collecte comporte un détecteur (1034) d'eau.

7. Détecteur selon l'une quelconque des revendications 1 à 6, **caractérisé en ce que**, le distributeur (1) comprenant une pompe (10), un compteur (30) de débit et un calculateur (32), ledit calculateur (32) est apte à détecter un débit d'hydrocarbures liquides dans ledit compteur (30) après distribution, le fonctionnement de ladite pompe (10) étant prolongé pendant une durée donnée.

## Claims

1. Leak detector in a liquid hydrocarbon dispenser (1), **characterised in that** said detector (100) comprises an impervious plate (101) disposed in the base of said dispenser (1) provided with a collection receptacle (102) designed to receive the liquid hydrocarbons resulting from leaks in the dispenser (1) collected by said impervious plate (101), said collection receptacle (102) having a detector (103) for sensing the level of said hydrocarbons configured so as to halt operation of the dispenser (1) when the detected level of hydrocarbons reaches a given level (N).

2. Detector as claimed in claim 1, **characterised in that** said level detector (103) is a float (1031) fitted with a position sensor (1032, 1033).

3. Sensor as claimed in claim 1, **characterised in that** said level detector (103) is an ultrasonic detector (1034).

4. Detector as claimed in claim 1, **characterised in that** said level detector (103) is an optical detector (1035, 1036).

5. Detector as claimed in any one of claims 1 to 4, **characterised in that** the collection receptacle (102) can be removed.

6. Detector as claimed in any one of claims 2 to 5, **characterised in that** the collection receptacle (102) has a water detector (1034).

7. Detector as claimed in any one of claims 1 to 6, **characterised in that** the dispenser (1) incorporates a pump (10), a flow counter (30) and a computer (32), said computer (32) being configured to detect a flow of liquid hydrocarbons,through said counter (30) after the dispensing process, operating of said pump (10) being prolonged for a given period.

## Patentansprüche

1. Leckdetektor in einem Flüssigkohlenwasserstoff-Verteiler (1), **dadurch gekennzeichnet, dass** der Detektor (100) eine dichte Platte (101) aufweist, welche am Boden des Verteilers (1) angeordnet und mit einem Sammelbehälter (102) versehen ist, der geeignet ist, die durch die dichte Platte (101) gesammelten und aus Leckagen in dem Verteiler (1) stammenden flüssigen Kohlenwasserstoffe aufzunehmen, wobei der Sammelbehälter (102) einen Kohlenwasserstoffniveaudetektor (103) aufweist, der geeignet ist, den Betrieb des Verteilers (1) anzuhalten, wenn das detektierte Kohlenwasserstoffniveau eine vorgegebene Höhe (N) erreicht.

2. Detektor nach Anspruch 1, **dadurch gekennzeichnet, dass** der Niveaudetektor (103) ein Schwimmer (1031) ist, der mit einem Positionsdetektor (1032, 1033) ausgestattet ist.

3. Detektor nach Anspruch 1, **dadurch gekennzeichnet, dass** der Niveaudetektor (103) ein Ultraschalldetektor (1034) ist.

4. Detektor nach Anspruch 1, **dadurch gekennzeichnet, dass** der Niveaudetektor (103) ein optischer Detektor (1035, 1036) ist.

5. Detektor nach einem der Ansprüche 1 bis 4, **dadurch gekennzeichnet, dass** der Sammelbehälter (102) abnehmbar ist.

6. Detektor nach einem der Ansprüche 2 bis 5, **dadurch gekennzeichnet, dass** der Sammelbehälter (102) einen Wasserdetektor (1034) aufweist.

7. Detektor nach einem der Ansprüche 1 bis 6, **dadurch gekennzeichnet, dass** ― da der Verteiler (1) eine Pumpe (10), einen Durchflusszähler (30) und einen Rechner (32) aufweist ― der Rechner (32) geeignet ist, eine Flüssigkohlenwasserstoffmenge in dem Zähler (30) nach Verteilung zu detektieren, wobei der Betrieb der Pumpe (10) während einer vorgegebenen Dauer verlängert wird.
